# EUROPÄISCHE PATENTSCHRIFT

(11) **EP 3 030 209 B1**
(45) Veröffentlichungstag und Bekanntmachung des Hinweises auf die Patenterteilung: **26.12.2018**
(21) Anmeldenummer: 14761289.9
(22) Anmeldetag: 08.08.2014
(51) Int. Cl.: A61G 13/10

(54) **SPANNKLAUE ZUR ANBRINGUNG AN EINER GLEITSCHIENE EINES OPERATIONSTISCHES**
CLAMPING CLAW FOR ATTACHING TO A SLIDE RAIL OF AN OPERATING TABLE
GRIFFE DE SERRAGE À PLACER SUR UNE GLISSIÈRE D'UNE TABLE D'OPÉRATION

(30) Priorität: 08.08.2013 DE 102013108574
(43) Veröffentlichungstag der Anmeldung: 15.06.2016
(73) Patentinhaber: Maquet GmbH, 76437 Rastatt (DE)
(72) Erfinder: KOCH, Guido, 76149 Karlsruhe (DE); KATZENSTEIN, Bernhard, 76473 Iffezheim (DE)
(74) Vertreter: Zacco GmbH
(86) Internationale Anmeldenummer: PCT/EP2014/067053
(87) Internationale Veröffentlichungsnummer: WO 2015/018922

(56) Entgegenhaltungen:
- WO-A1-2009/132458
- DE-A1-102009 021 224
- DE-U1-202011 101 422
- US-A1- 2007 136 947

## Beschreibung

Die Erfindung betrifft eine Spannklaue zur Anbringung an einer Gleitschiene eines Operationstisches nach dem Oberbegriff des Anspruchs 1.

Operationstische weisen üblicherweise längs ihrer Tischsegmente beidseitig so genannte Gleitschienen auf, die in der Regel einen rechteckigen Querschnitt haben und dazu dienen, Zubehörteile wie beispielsweise Lagerungshilfsmittel an dem Operationstisch in der gewünschten Position zu befestigen. Zur Befestigung der Zubehörteile werden Spannklauen verwendet, die mit dem jeweiligen Zubehörteil gekoppelt sind und an der Gleitschiene angebracht werden.

DE 20 2011 101422 offenbart eine Spannklaue zur Anbringung von Anbauten an Schienen und Tische.

In der einfachsten Bauform ist eine solche Spannklaue aus einem klammerförmigen Teil gebildet, das auf die Gleitschiene aufgeschoben und dann mittels einer Klemmschraube in der gewünschten Position fixiert wird. Weiter entwickelte Bauformen ermöglichen es, Spannklauen an einer beliebigen Stelle auf der Gleitschiene einzuschwenken und somit schneller an der Gleitschiene zu befestigen, ohne auf einen Zugang von einem Ende der Gleitschiene her angewiesen zu sein.

Bekannte Ausführungsformen solcher auch als Spannkloben bezeichneter Spannklauen zeichnen sich dadurch aus, dass ein hakenförmiges Gebilde über das obere Ende der im Querschnitt rechteckigen Gleitschiene greift. Dabei kommen in einem spitzen Winkel zulaufende Innenflanken der Spannklaue an den beiden oberen, parallel zueinander verlaufenden Längskanten der Gleitschiene zur Anlage. Die Gewichtskraft der Spannklaue, die in der Regel außerhalb des Operationstisches angreift, dreht Letztere so weit, bis eine Seitenflanke an der senkrechten Außenfläche der Gleitschiene zur Anlage kommt. Ein Klemmelement, das beispielsweise über eine Knebelschraube nach oben geführt wird, legt sich wiederum mit einer schräg gestellten Fläche an der unteren Innenkante der Gleitschiene an und fixiert nach Aufbringung einer Vorspannung die Spannklaue. Die Kraftübertragung von der Spannklaue zur Gleitschiene erfolgt dabei nahezu ausschließlich über die Kanten der Gleitschiene. Somit ergeben sich in Abhängigkeit der Ausprägung der Kantenverrundung unterschiedliche und vor allem hohe Flächenpressungen, die das Lastaufnahmevermögen der Spannklaue stark limitieren. Auch erscheint die Verbindung zwischen Spannklaue und Gleitschiene weich und nachgiebig, da die hohe Lastkonzentration zu lokalen Verformungen der Kanten führen kann. Des Weiteren addieren sich in der Diagonalen des Rechteckquerschnittes die Toleranzen der Abstandsmaße sowie der Kantenverrundungen. Diese Toleranzen müssen durch das Klemmelement kompensiert werden können.

Was die Handhabung betrifft, sind Schnellspannsysteme bevorzugt, bei denen das Anlegen und Vorspannen des Klemmelementes möglichst mittels einer Bewegung erfolgen soll. Dies wird durch den benötigten großen Stellweg des Klemmelementes erschwert.

Die vorstehend erläuterte Problematik wird dadurch erschwert, dass sich die im Einsatz befindlichen Gleitschienen in ihren Abmaßen und Verrundungen sehr stark voneinander unterscheiden. Deshalb ist es bislang schwierig, eine Spannklaue bereitzustellen, die unabhängig von der jeweils verwendeten Gleitschiene eine einfache und präzise Anbringung von Zubehörteilen an einem Operationstisch ermöglicht.

Aufgabe der Erfindung ist es, eine Spannklaue anzugeben, die unabhängig von der Kantenverrundung der jeweils verwendeten Gleitschiene eine einfache und sichere Anbringung eines Zubehörteils an einem Operationstisch ermöglicht.

Die Erfindung löst diese Aufgabe durch die Spannklaue mit den Merkmalen des Anspruchs 1. Vorteilhafte Weiterbildungen sind in den Unteransprüchen angegeben.

Die erfindungsgemäße Spannklaue hat einen Grundkörper und eine an dem Grundkörper angebrachte Klemmstruktur, die mindestens ein zur Anlage an die Gleitschiene ausgebildetes Anlageelement aufweist. Mittels eines Betätigungsorgans, das mit der Klemmstruktur wirkverbunden ist, lässt sich die Klemmstruktur in einen verriegelten Zustand bringen, in dem das Anlageelement der Klemmstruktur an der Gleitschiene anliegt. Dabei greift im verriegelten Zustand der Klemmstruktur das Anlageelement an mindestens einem Kantenbereich der Gleitschiene an, in dem sich eine Schienenkante zwischen zwei in der Regel in einem rechten Winkel gegeneinander geneigten Schienenflächen befindet. Die Erfindung sieht nun vor, dass das Anlageelement zwei Kontaktflächen und eine zwischen den Kontaktflächen angeordnete Kantenaussparung aufweist, die im verriegelten Zustand der Klemmstruktur, in dem eine der beiden Kontaktflächen an einer der beiden Schienenflächen und die andere Kontaktfläche an der anderen Schienenfläche anliegt, die Schienenkante berührungslos aufnimmt.

Durch die erfindungsgemäße Kantenaussparung ist gewährleistet, dass das Anlageelement nur flächig an dem Kantenbereich der Gleitschiene angreift, d.h. im Kantenbereich nur die Schienenflächen mit dem Anlageelement in Kontakt sind, während die Schienenkante selbst keinen Kontakt mit der Spannklaue hat. Demzufolge hat auch die Verrundung der Schienenkante keinen Einfluss auf die Klemmkraft, mit der die Spannklaue an der Gleitschiene befestigt werden kann. Insbesondere erübrigt es sich, bei der Auslegung der Spannklaue auf die jeweils verwendete Gleitschiene auf die Kantenverrundungen bezogene Toleranzen zu berücksichtigen.

Die Spannklaue hat den Vorteil, dass sie sich mit nur einer Hand an der Gleitschiene anbringen und dort verriegeln lässt. Dadurch ist die Handhabung besonders einfach.

Vorzugsweise weist die Klemmstruktur einen beweglich gelagerten Spannblock auf, der mit dem Betätigungsorgan wirkverbunden ist und eine Spannfläche hat, die durch Betätigen des Betätigungsorgans an einer Fläche der Gleitschiene, die von dem Anlageelement unbeaufschlagt ist, festziehbar ist. Geht man von einem hochkant ausgerichteten Rechteckprofil der Gleitschiene aus, so greifen in dieser bevorzugten Ausführungsform ein erstes Anlageelement (unter Aussparung der zugehörigen Schienenkante) an der oberen und der inneren Seite des Rechtecks und ein zweites Anlageelement (wiederum unter Aussparung der zugehörigen Schienenkante) an der unteren und der inneren Seite des Rechtecks an, während die Spannfläche des Spannblocks zur Verriegelung der Klemmstruktur an der äußeren Seite des Rechtecks festgezogen wird. Auf diese Weise wird die Spannklaue besonders sicher an der Gleitschiene verklemmt.

Vorzugsweise weist die Klemmstruktur einen mit dem Betätigungsorgan gekoppelten Exzenter auf, der mit Betätigen des Betätigungsorgans die Spannfläche des Spannblocks auf die von dem Anlageelement unbeaufschlagte Fläche der Gleitschiene drückt. Die Verwendung eines beispielsweise an einer drehbaren, mit dem Betätigungsorgan gekoppelten Welle ausgebildeten Exzenters ermöglicht es, auf besonders einfache Weise, die Spannfläche des Spannblocks an der Gleitschiene festzuziehen.

In einer vorteilhaften Ausgestaltung ist der Spannblock aus einem mit dem Betätigungsorgan wirkverbunden Druckstück und einem mit der Spannfläche versehenen Anlageschuh gebildet, der schwenkbar auf dem Druckstück gelagert ist. Die zweiteilige, in sich verschwenkbare Ausbildung des Spannblocks gewährleistet im verriegelten Zustand ein sicheres Verklemmen des Spannblocks an der Gleitschiene. Wird nämlich auf den Spannblock eine Kraft ausgeübt, die in Längsrichtung der Gleitschiene wirkt, so wird diese Kraft gleichsam dadurch absorbiert, dass der Anlageschuh und das Druckstück gegeneinander verschwenkt werden. Wären dagegen der Anlageschuh und das Druckstück starr miteinander verbunden, so würde sich die Spannklaue im verriegelten Zustand längs der Gleitschiene bewegen, wenn die Kraft den Reibwiderstand zwischen der Gleitschiene und dem Anlageschuh übersteigt.

Die vorstehend erläuterte Ausführungsform wird vorteilhaft dadurch weitergebildet, dass die Spannfläche des Anlageschuhs aus einem zentralen, plan geformten Flächenabschnitt und zwei seitlich an den planen Flächenabschnitt anschließenden, gewölbten Flächenabschnitten gebildet ist. Die Flächenabschnitte sind dabei in Längsrichtung der Gleitschiene angeordnet, d.h. auf einen ersten gewölbten Flächenabschnitt folgt in Längsrichtung der Gleitschiene ein zentraler, plan geformter Flächenabschnitt und auf diesen ein zweiter gewölbter Flächenabschnitt. In Abhängigkeit der Schwenkstellung des Anlageschuhs relativ zu dem Druckstück liegt entweder der zentrale, plan geformte Flächenabschnitt oder einer der beiden seitlichen gewölbten Flächenabschnitte an der Gleitschiene an.

Vorzugsweise ist der Anlageschuh durch ein federbelastetes Halteelement in einer vorbestimmten Schwenkstellung gehalten. Das Halteelement kann dabei aus einer oder mehreren federbelasteten Kugeln gebildet sein. Ist der Anlageschuh um eine vertikale Achse schwenkbar, so ist die vorbestimmte Schwenkstellung, in der das Halteelement den Anlageschuh hält, z.B. eine Mittelstellung, aus der der Anlageschuh längs der horizontal verlaufenden Gleitschiene zu beiden Seiten hin entgegen der von dem Halteelement ausgeübten Vorspannkraft ausgelenkt werden kann.

In einer alternativen Ausführungsform ist der Spannblock einstückig ausgebildet und hat eine von seiner Spannfläche abgewandte Lagerfläche, die eine konkave Form hat und sich in Kontakt mit einer an dem Exzenter ausgebildeten Andruckfläche befindet, die eine der konkaven Form der Lagerfläche entsprechende konvexe Form hat.

Auch in dieser Ausführungsform ist die Spannfläche des Spannblocks vorzugsweise aus einem zentralen, plan geformten Flächenabschnitt und zwei seitlich an den planen Flächenabschnitt anschließenden, gewölbten Flächenabschnitten gebildet.

Vorzugsweise ist der Spannblock mit seinem von der Spannfläche abgewandten Ende in einer in dem Grundkörper ausgebildeten Aufnahme angeordnet und weist mindestens zwei konvex geformte Anlageflächen auf, die an mindestens zwei in der Aufnahme ausgebildeten Gegenflächen anliegen. Durch diese Art der Lagerung des Spannblocks in der in dem Grundkörper ausgebildeten Aufnahme ist die Beweglichkeit des Spannblocks in der gewünschten Weise eingeschränkt.

Vorteilhaft ist eine Bügelfeder vorgesehen, die in einer in der Spannfläche des Spannblocks ausgebildeten Vertiefung anliegt. Die Bügelfeder dient dazu, den Kraftschluss zu der den Exzenter tragenden Welle herzustellen. Außerdem hat sie die Funktion, den Spannblock im unbelasteten Zustand in der gewünschten Stellung auszurichten.

Vorzugsweise sind mindestens zwei Anlageelemente vorgesehen, die im verriegelten Zustand der Klemmstruktur in der erfindungsgemäßen Weise an den verschiedenen Kantenbereichen der Gleitschiene angreifen, d.h. mit ihren Kantenaussparungen die jeweiligen Schienenkanten derart umgreifen, dass diese berührungslos in den Kantenaussparungen aufgenommen sind. Beispielsweise kann die Spannklaue zwei Paare von Anlageelementen aufweisen, von denen ein Paar an einem unteren Kantenbereich und das andere Paar an einem oberen Kantenbereich der Gleitschiene angreift.

Vorzugsweise umfasst das mindestens eine Anlageelement einen Schwenkriegel, der mit einem Ende in dem Grundkörper schwenkbar gelagert ist und an seinem freien Ende zwei konvex gewölbte Flächen hat, welche die Kontaktflächen bilden. Die konvexe Ausbildung der Kontaktflächen sorgt dafür, dass die Anlageelemente lediglich einen Linienkontakt mit den ihnen zugeordneten Schienenflächen aufweisen, während die jeweilige Schienenkante selbst freigespart ist, d.h. keinen Kontakt zu dem jeweiligen Anlageelement hat. Hierdurch wird eine besonders zuverlässige Verriegelung der Spannklaue an der Gleitschiene erreicht.

Weitere bevorzugte Ausgestaltungen der Erfindung werden aus der folgenden Beschreibung ersichtlich.

Die Erfindung wird im Folgenden anhand der Figuren näher erläutert. Darin zeigen:
- Fig. 1: eine perspektivische Ansicht einer erfindungsgemäßen Spannklaue;
- Fig. 2: eine geschnittene Seitenansicht der an einer Gleitschiene angebrachten Spannklaue;
- Fig. 3: eine perspektivische Ansicht eines Grundkörpers der Spannklaue;
- Fig. 4: eine Seitenansicht von Teilen der Spannklaue zur Veranschaulichung, wie ein erfindungsgemäßer Taumelnocken an der Gleitschiene angreift;
- Fig. 5: eine Seitenansicht von Teilen der Spannklaue zur Veranschaulichung, wie ein erfindungsgemäßer Schwenkriegel an der Gleitschiene angreift;
- Fig. 6: eine perspektivische Ansicht, die insbesondere einen Spannblock gemäß erster Ausführungsform zeigt;
- Fig. 7: eine teilweise geschnittene Draufsicht, die insbesondere den Spannblock gemäß erster Ausführungsform zeigt;
- Fig. 8: eine perspektivische Ansicht, die insbesondere einen Spannblock gemäß zweiter Ausführungsform zeigt;
- Fig. 9: eine weitere perspektivische Ansicht, die insbesondere den Spannblock gemäß zweiter Ausführungsform zeigt;
- Fig. 10: eine perspektivische Ansicht, die den Spannblock gemäß zweiter Ausführungsform in Alleinstellung zeigt;
- Fig. 11: eine Seitenansicht, welche die Gleitschiene und die Spannklaue in einer geöffneten Stellung zeigt;
- Fig. 12: eine Seitenansicht, welche die Gleitschiene und die Spannklaue in einer gesicherte Grundstellung zeigt; und
- Fig. 13: eine Seitenansicht, welche die Gleitschiene und die Spannklaue in einer verriegelten Stellung zeigt.

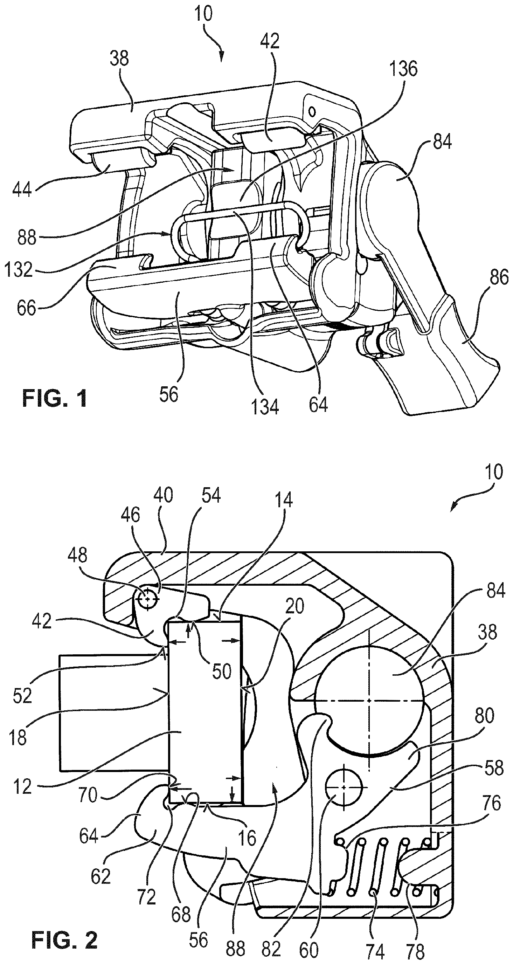

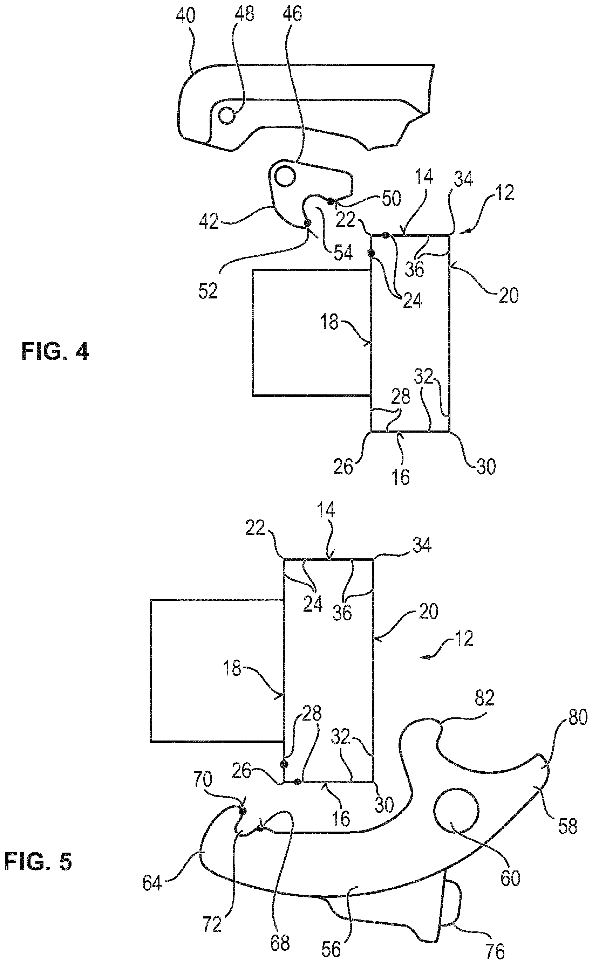

Die Figuren 1 und 2 zeigten in perspektivischer Ansicht bzw. in einer geschnittenen Seitenansicht eine Spannklaue 10, die dazu dient, ein nicht gezeigtes Zubehörteil an einer Gleitschiene 12 eines Operationstisches anzubringen. Wie auch in den Figuren 4 und 5 gezeigt, hat die Gleitschiene 12 einen rechteckigen Querschnitt. Demgemäß weist die Gleitschiene 12 eine obere Schienenfläche 14 und eine hierzu parallele untere Schienenfläche 16 sowie eine innere Schienenfläche 18 und eine hierzu parallele äußere Schienenfläche 20 auf. Zwischen der oberen Schienenfläche 14 und der inneren Schienenfläche 18 befindet sich eine Schienenkante 22, die sich in Längsrichtung der Gleitschiene 12, d.h. in der Darstellung nach Figur 2 senkrecht zur Zeichenebene erstreckt. Die an diese Schienenkante 22 unmittelbar angrenzenden Bereiche der oberen Schienenfläche 14 und der inneren Schienenfläche 18 werden in ihrer Gesamtheit im Folgenden als Kantenbereich 24 bezeichnet. Entsprechendes gilt für die in den Figur 4 und 5 mit 26, 30 und 34 bezeichneten Schienenkanten sowie die diesen zugeordneten, mit 28, 32 bzw. 36 bezeichneten Kantenbereiche.

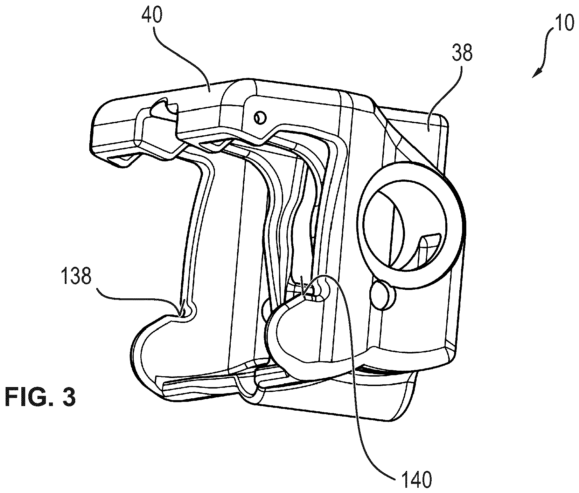

Die Spannklaue 10 hat einen in Figur 3 in Alleinstellung gezeigten, im Wesentlichen hakenförmigen Grundkörper 38. In einem oberen Abschnitt 40 des Grundkörpers 38, der bei angebrachter Spannklaue 10 die Gleitschiene 12 gleichsam von oben her umgreift, sind zwei Taumelnocken 42 und 44 schwenkbar gelagert. Die beiden Taumelnocken 42 und 44 sind parallel zur Längsrichtung der Gleitschiene 12 aufeinander ausgerichtet. Da die beiden Taumelnocken 42 und 44 baugleich sind, wird im Folgenden nur der in den Figuren 2 und 4 gezeigte Taumelnocken 42 im Detail beschrieben.

Wie aus Figur 2 hervorgeht, ist der Taumelnocken 42 in einem mit 46 bezeichneten Nockenbereich um einen Stift 48 schwenkbar gelagert, der fest in dem Grundkörper 12 montiert ist. Dabei weist der gelagerte Nockenbereich 46 des Taumelnockens 42 eine gekrümmte Außenfläche auf, die an einer entsprechend konkav gekrümmten Gegenfläche anliegt, die sich an der Innenseite des Grundkörpers 38 befindet. Ferner hat der Taumelnocken 42 an seinem freien, d.h. nicht gelagerten Ende zwei konvex gewölbte Kontaktflächen 50 und 52 sowie eine zwischen den Kontaktflächen 50 und 52 angeordnete konkave Kantenaussparung 54.

Ist die Spannklaue 10 an der Gleitschiene 12 angebracht, so liegen die beiden Kontaktflächen 50, 52 des Taumelnockens 42 im Kantenbereich 24 an der oberen Schienenfläche 14 bzw. der inneren Schienenfläche 18 an, wobei die Schienenkante 22 in der Kantenaussparung 54 berührungslos aufgenommen ist. Der Taumelnocken 42 umgreift also die Gleitschiene 12 im Kantenbereich 24 so, dass die Schienenkante 22 freigespart ist, d.h. keinen Kontakt mit dem Taumelnocken 42 hat. Die Anlage auf der Gleitschiene 12 erfolgt allein über die beiden Kontaktflächen 50, 52 des Taumelnockens 42, die jeweils in Linienkontakt mit der oberen Schienenfläche 14 bzw. der inneren Schienenfläche 18 treten. Dieser Linienkontakt ist in der Seitenansicht nach Figur 2 durch Pfeile und in der Seitenansicht nach Figur 4 durch Punkte an den Kontaktflächen 50, 52 und Punkte an den Schienenflächen 14, 18 in dem Kantenbereich 24 veranschaulicht.

Der Taumelnocken 42 bildet somit ein erfindungsgemäßes Anlageelement, welches gewährleistet, dass zur Lasteinleitung allein die obere Schienenfläche 14 und die innere Schienenfläche 18 der Gleitschiene 12 herangezogen werden, während die Schienenkante 22 selbst unbelastet bleibt. Das Gleiche gilt selbstverständlich für den anderen Taumelnocken 44.

Ein weiteres erfindungsgemäßes Anlageelement ist durch einen Schwenkriegel 56 gebildet, der mit einem Ende 58 schwenkbar um einen Stift 60 gelagert ist, der fest in dem Grundkörper 38 montiert ist. An einem dem gelagerten Ende 58 entgegengesetzten freien Ende 62 des Schwenkriegels 56 befinden sich zwei Kontaktbereiche 64 und 66, die in Längsrichtung der Gleitschiene 12 voneinander beabstandet ist. Die Kontaktbereiche 64 und 66 sind baugleich, so dass im Folgenden lediglich der in den Figuren 2 und 5 gezeigte Kontaktbereich 64 beschrieben wird.

An dem Kontaktbereich 64 sind zwei konvex gewölbte Kontaktflächen 68 und 70 ausgebildet, zwischen denen sich eine konvex geformte Kantenaussparung 72 befindet. Im verriegelten Zustand liegen die beiden Kontaktflächen 68 und 70 im Kantenbereich 28 an der unteren Schienenfläche 16 bzw. der inneren Schienenfläche 18 an. Dagegen ist die Schienenkante 26 berührungslos in der Kantenaussparung 72 aufgenommen. Die Anlage der beiden Kontaktflächen 68 und 70 erfolgt wie auch bei den Taumelnocken 42 und 44 jeweils über Linienkontakt. Wiederum ist der Linienkontakt in Figur 2 durch Pfeile und in Figur 5 durch Punkte veranschaulicht.

Wie in Figur 2 gezeigt, ist der Schwenkriegel 56 durch eine Druckfeder 74 so vorgespannt, dass die Kontaktfläche 68 des Schwenkriegels 56 nach oben gegen die untere Schienenfläche 16 gedrückt ist. Die Druckfeder 74 ist zwischen einem an dem Schwenkriegel 56 ausgebildeten Vorsprung 76 und einem an dem Grundkörper 38 ausgebildeten Zapfen 78 eingespannt. An dem gelagerten Ende 58 des Schwenkriegels 56 befinden sich zwei Steuerhebel 80 und 82.

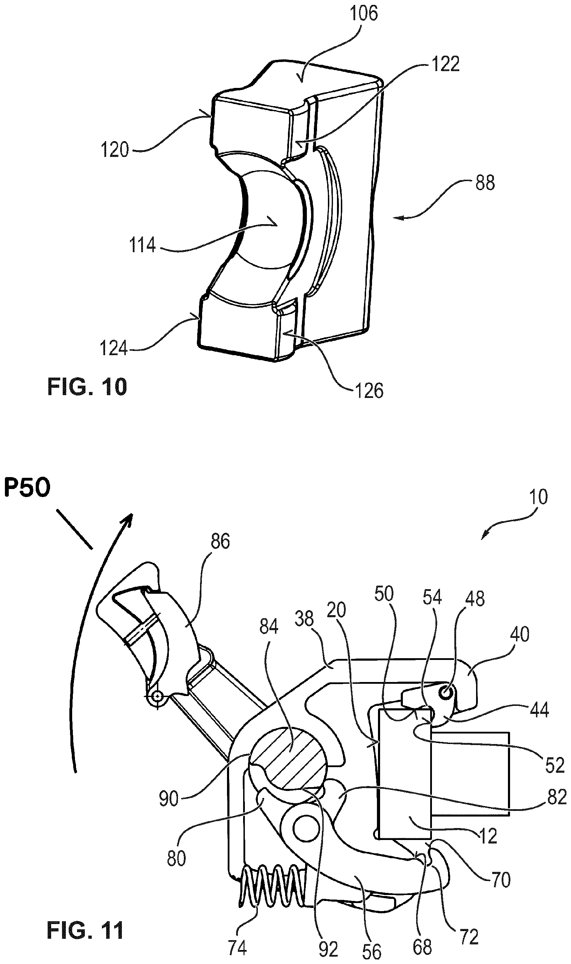

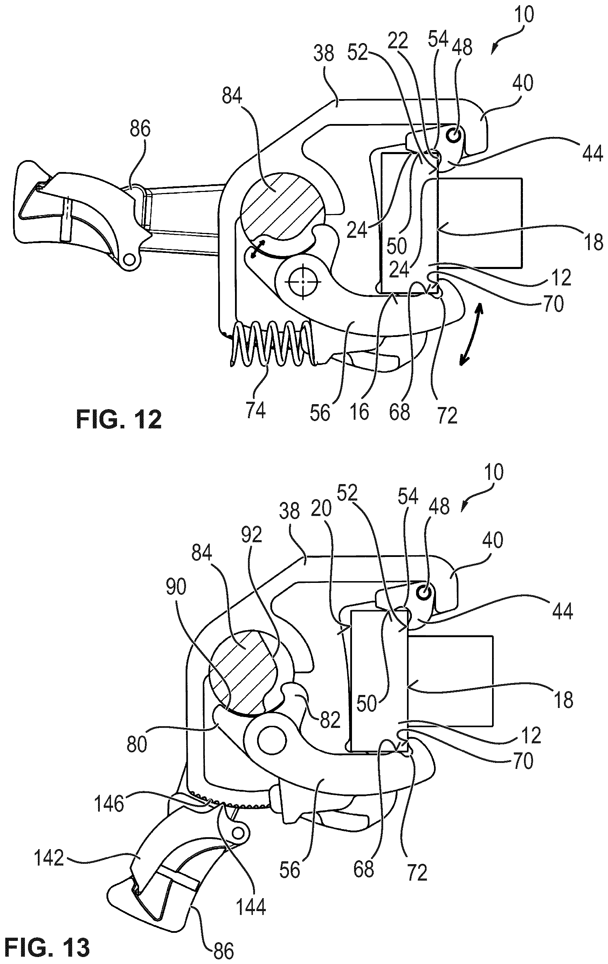

In dem Grundkörper 38 der Spannklaue 10 ist ferner ein Exzenter 84 schwenkbar gelagert. Der Exzenter 84 ist mit einem Betätigungshebel 86 gekoppelt und dient dazu, in später genauer erläuterter Weise einen Spannblock 88 auf die äußere Schienenfläche 20, die von den Taumelnocken 42, 44 und dem Schwenkriegel 56 unbeaufschlagt ist, zu drücken, um die Spannklaue 10 an der Gleitschiene 12 festzuspannen. Der Exzenter 84 nimmt ferner auf die Bewegung des Schwenkriegels 56 Einfluss. Hierzu sind an dem Exzenter 84, wie in den Figuren 11 und 13 gezeigt, zwei Steuernocken 90 und 92 ausgebildet, die mit dem Steuerhebel 80, 82 des Schwenkriegels 56 zusammenwirken.

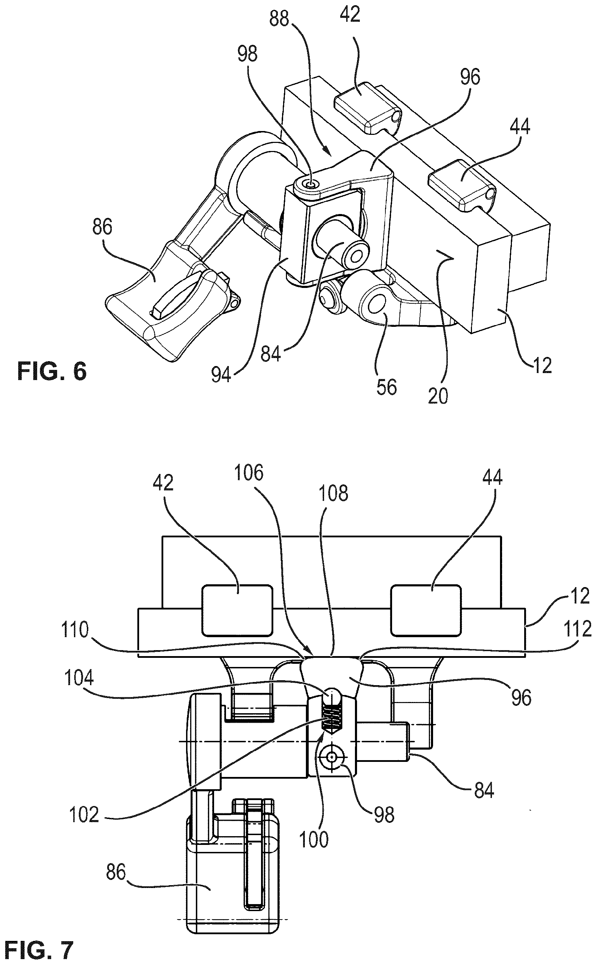

In den Figuren 6 und 7 ist eine erste Ausführungsform des Spannblocks 88 gezeigt. In dieser ersten Ausführungsform ist der Spannblock 88 aus einem Druckstück 94 und einem Anlageschuh 96 gebildet. Der Anlageschuh 96 ist um eine vertikale Achse 98 schwenkbar auf dem Druckstück 94 gelagert. Ein federbelastetes Halteelement 100, das in dieser Ausführungsform aus einer Druckfeder 102 und einer oder mehreren von der Druckfeder 102 beaufschlagten Kugeln 104 gebildet ist, dient dazu, den Anlageschuh 96 in einer mittleren Grundstellung zu halten, wie in Figur 7 gezeigt ist. Der Anlageschuh 96 hat eine der Gleitschiene 12 zugewandte Spannfläche 106, die aus einem zentralen, plan geformten Flächenabschnitt 108 sowie zwei seitlich (in Figur 7 links und rechts) an den planen Flächenabschnitt 108 anschließenden, von der Gleitschiene 12 weg gewölbten Flächenabschnitten 110 und 112 gebildet ist.

Wird der Betätigungshebel 86 gemäß Figur 6 nach unten geschwenkt, so drückt der mit dem Betätigungshebel 86 gekoppelte Exzenter 84 das Druckstück 94 in Richtung der Gleitschiene 12. Dadurch wird der mit dem Druckstück 94 schwenkbar gekoppelte Anlageschuh 96 auf die äußere Schienenfläche 20 der Gleitschiene 12 gepresst.

Die vorstehend erläuterte zweiteilige Ausbildung des Spannblocks 88 gewährleistet, dass die Spannklaue 10 sicher an der Gleitschiene 12 verklemmt werden kann, ohne in Längsrichtung der Gleitschiene 12 abzugleiten. So wird durch die Formgebung der Spannfläche 106 des Anlageschuhs 96 und die schwenkbare Verbindung zwischen dem Anlageschuh 96 und dem Druckstück 94 ggf. eine Verschwenkung des Anlageschuhs 96 aus seiner mittleren Grundstellung (vgl. Figur 7) bewirkt. Wären demgegenüber der Anlageschuh 96 und das Druckstück 94 starr miteinander verbunden, so würde sich die Gleitschiene 12, die unter einer gewissen Vorspannung an der Spannfläche 106 anliegt, in ihrer Längsrichtung bewegen, wenn die auf die Spannklaue 10 wirkende Kraft den Reibwiderstand zwischen der Gleitschiene 12 und dem Anlageschuh 96 übersteigt.

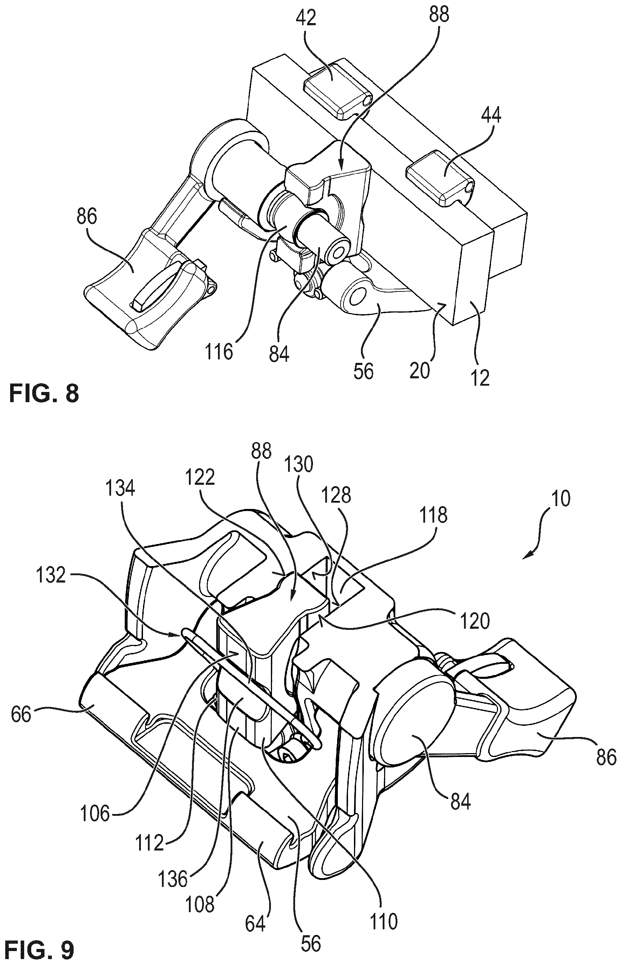

In den Figuren 8, 9 und 10 ist eine zweite Ausführungsform des Spannblocks 88 gezeigt. Diese zweite Ausführungsform zeichnet sich dadurch aus, dass der Spannblock 88 einstückig ausgebildet ist. Dabei ist die Spannfläche 106 des Spannblocks 88 wie in der ersten Ausführungsform gestaltet, d.h. aus dem zentralen Flächenabschnitt 108 und den beiden seitlich an den zentralen Flächenabschnitt 108 anschließenden gewölbten Flächenabschnitten 110, 112 gebildet. Der einstückige Spannblock 88 hat gemäß Figur 10 eine von seiner Spannfläche 106 abgewandte Lagerfläche 114, die in dieser Ausführungsform als konkave Kugelfläche ausgebildet ist. An dem Exzenter 84 ist in dieser Ausführungsform eine entsprechend konvex kugelförmig gestaltete Andruckfläche 116 vorgesehen, wie in Figur 8 gezeigt ist. Durch diese Ausgestaltung lässt sich der Spannblock 88 um eine parallel zur Längsachse der Gleitschiene 12 liegende horizontale Achse sowie eine hierzu senkrechte vertikale Achse bewegen.

Der Spannblock 88 ist mit seinem von der Spannfläche 106 abgewandten Ende in einer in dem Grundkörper 38 ausgebildeten Aufnahme 118 angeordnet, wie in Figur 9 gezeigt ist. Dabei liegt der Spannblock 88 mit zwei konvex geformten Anlageflächen 120, 122, die oben an dem von der Spannfläche 106 abgewandten Ende des Spannblocks ausgebildet sind, sowie zwei konvex geformten Anlageflächen 124, 126, die unten an dem von der Spannfläche 106 abgewandten Ende des Spannblocks 88 ausgebildet sind, an Gegenflächen an, die sich in der Aufnahme 118 befinden. Von den vier Gegenflächen, die den vier Anlageflächen 120, 122, 124 und 126 zugeordnet sind, sind in Figur 9 lediglich die beiden oberen Flächen angedeutet und dort mit 128 und 130 bezeichnet. Durch den Kontakt der Anlageflächen 120, 122, 124, 126 und der zugehörigen Gegenflächen 128, 130 wird eine Drehung des Spannblocks 88 um eine horizontale Achse, die senkrecht zur Längsrichtung der Gleitschiene 12 liegt, verhindert. Zudem wird auch eine Verschiebung längs der Gleitschiene 12 verhindert.

Die Spannklaue 10 weist ferner eine Bügelfeder 132 auf, die mit ihren beiden Bügelenden an dem Grundkörper 38 befestigt ist. Die beiden Bügelenden sind über einen Bügelabschnitt 134 miteinander verbunden, der in einer Vertiefung 136 anliegt, die in der Spannfläche 106 des Spannblocks 88 ausgebildet ist. Die Bügelfeder 132 hat die Funktion, den Kraftschluss zu dem Exzenter 84 herzustellen. Außerdem dient sie der Mittelausrichtung des Spannblocks 88 im unbelasteten Zustand.

Die Funktion dieser zweiten Ausführungsform des Spannblocks 88 entspricht jener der ersten Ausführungsform. So kann sich auch bei der zweiten Ausführungsform der Spannblock 88 durch Rotation um den Exzenter 84 an der äußeren Schienenfläche 20 ausrichten, wenn der Spannblock 88 der Schienenfläche 20 angenähert und an dieser verspannt wird. Bei einer Belastung in Längsrichtung der Gleitschiene 12 kann der Spannblock 88 um eine vertikale Achse verschwenken und somit wiederum die gewünschte Verklemmung herbeiführen. Die auftretenden Axialkräfte werden dabei über die Anlageflächen 120, 122, 124 und 126 von dem Spannblock 88 in den Grundkörper 38 der Spannklaue 10 eingeleitet.

Unter Bezugnahme auf die Figuren 11, 12 und 13 wird im Folgenden erläutert, wie die Spannklaue 10 an der Gleitschiene 12 eingehängt und dort verriegelt wird.

Zum Anbringen der Spannklaue 10 wird der Betätigungshebel, wie in Figur 12 gezeigt, in eine horizontale Stellung gebracht. In dieser Hebelstellung greift der Exzenter 84, der mit dem Betätigungshebel 86 gekoppelt ist, nicht an dem Schwenkriegel 56 an. Die Spannklaue 10 wird also auf die Gleitschiene 12 aufgesetzt und dort eingeschwenkt. Dabei legen sich die Taumelnocken 42, 44, von denen in den Figuren 11, 12 und 13 nur der Taumelnocken 44 gezeigt ist, an dem Kantenbereich 24 der Gleitschiene 12 an, und die Spannklaue 12 schwenkt mit ihrem oberen Abschnitt um die obere innere Schienenkante 22, bis der Grundkörper 38 an der äußeren Schienenfläche 20 zur Anlage kommt.

Der durch die Druckfeder 74 belastete und in der in Figur 12 gezeigten entriegelten Exzenterstellung schwenkbare Schwenkriegel 56 gleitet dabei an der unteren Schienenfläche 16 ab und schnappt an der inneren Schienenfläche 18 ein. Die Druckfeder 74 drückt den Schwenkriegel 56 mit der Kontaktfläche 68 gegen die untere Schienenfläche 16, wobei die andere Kontaktfläche 70 des Schwenkriegels 56 im unbelasteten Zustand noch keinen Kontakt zur inneren Schienenfläche 18 hat. Ein Ausschwenken der Spannklaue 10 entgegen dieser Einschwenkbewegung ist nun jedoch nicht mehr möglich, da dies durch die dann auftretende Anlage der Kontaktfläche 70 des Schwenkriegels 56 an der inneren Schienenfläche 18 verhindert wird. Damit ist die Spannklaue 10 bereits von einem Herunterfallen gesichert, jedoch noch frei auf der Gleitschiene verschiebbar. Der in Figur 12 gezeigte Zustand kann deshalb als gesicherte Grundstellung bezeichnet werden.

Figur 13 zeigt den verriegelten Zustand der Spannklaue 10, der dadurch erreicht wird, dass der Betätigungshebel 86 ausgehend von der gesicherten Grundstellung nach Figur 12 nach unten verschwenkt wird. Durch dieses Verschwenken des Betätigungshebels 86 wird der Exzenter 84 der äußeren Schienenfläche 20 angenähert. Dabei verhindert der Steuernocken 90 im Zusammenspiel mit dem korrespondierenden Steuerhebel 80 des Schwenkriegels 56, dass der Schwenkriegel 56 im geschlossenen Zustand durch äußere Krafteinwirkung in eine öffnende, die Gleitschiene 12 freigebende Stellung gebracht werden kann.

Der Spannblock 88 kann, wie weiter oben beschrieben, um die Längsachse des Exzenters 84 in engen Grenzen taumeln und richtet sich bei Annäherung an der äußeren Schienenfläche 20 aus. Die von der äußeren Schienenfläche 20 eingeleitete Kraft wird auf der inneren Schienenfläche 18 unten über die Kontaktfläche 70 und oben über die Kontaktfläche 50 des Taumelnockens 44 (bzw. 42) wieder in den Grundkörper 38 der Spannklaue 10 zurückgeführt. Da sich der Taumelnocken 42 über den abgerundeten Nockenbereich 46 am Grundkörper 38 der Spannklaue 10 abstützt, bewirkt die Krafteinleitung über die Kontaktfläche 52 eine Verdrehung des Taumelnockens 42, bis die Kontaktfläche 50 auf der oberen Schienenfläche 14 zur Anlage kommt und diese in vertikaler Richtung auf Auflageflächen 138, 140 zu bewegt, die an dem Grundkörper 38 ausgebildet und in Figur 3 gezeigt sind. Somit wird die Gleitschiene 12 ausgehend von einer horizontalen Schließbewegung sowohl horizontal als auch vertikal verspannt.

In Figur 11 ist die geöffnete Stellung der Spannklaue 10 dargestellt, in welcher der Betätigungshebel 86 nach oben geschwenkt ist. Wird der Betätigungshebel 86 nach oben verschwenkt, so läuft der Steuernocken 92 des Exzenters 84 auf den Steuerhebel 82 des Schwenkriegels 56 auf, wodurch Letzterer entgegen der von der Druckfeder 74 ausgeübten Vorspannkraft nach unten gedrückt wird. Dadurch wird die Gleitschiene 12 freigegeben, so dass die Spannklaue 10 herausgeschwenkt werden kann. Ein selbsttätiges Zurückschnappen aus der in Figur 13 gezeigten verriegelten Stellung in die in Figur 12 dargestellte Grundstellung beispielsweise durch Vibration oder ungewollte Betätigung wird über einen Rasthebel 142 verhindert, der an dem Betätigungshebel 86 ausgebildet ist und mit einer federbelasteten Nase 144 in eine Reihe von Gegenzähnen 146 eingreift, die an dem Grundkörper 38 angeordnet sind. Nur durch Betätigen des Rasthebels 142 ist es möglich, den Exzenter 84 in die unverriegelte (aber gesicherte) Grundstellung nach Figur 12 zurückzuführen.

Wir vorstehend erläutert, wird die erfindungsgemäße Spannklaue 10 nur über die Schienenflächen 14, 16, 18 und 20, nicht aber über die Schienenkanten 22, 26, 30 und 34 an der Gleitschiene 12 verspannt. Deshalb muss der Exzenter 84 nur die Maßtoleranzen der Gleitschiene 12 in horizontaler und in vertikaler Richtung kompensieren, nicht jedoch die unterschiedlichen Kantenverrundungen. Dadurch kann die Exzentrizität des Exzenters 84 klein gehalten werden.

Durch die große Hebelübersetzung zwischen dem Betätigungshebel 86 und dem Exzenter 84 können große Normalkräfte auf die Gleitschiene 12 ausgeübt werden.

### Bezugszeichenliste

- 10: Spannklaue
- 12: Gleitschiene
- 14: Obere Schienenfläche
- 16: Untere Schienenfläche
- 18: Innere Schienenfläche
- 20: Äußere Schienenfläche
- 22, 26, 30, 34: Schienenkanten
- 24, 28, 32, 36: Kantenbereiche
- 38: Grundkörper
- 40: Oberer Abschnitt
- 42,44: Taumelnocken
- 46: Nockenbereich
- 48: Stift
- 50, 52: Kontaktflächen
- 54: Kantenaussparung
- 56: Schwenkriegel
- 58: Gelagertes Ende
- 60: Stift
- 62: Freies Ende
- 64, 66: Kontaktbereiche
- 68, 70: Kontaktflächen
- 72: Kantenaussparung
- 74: Druckfeder
- 76: Vorsprung
- 78: Zapfen
- 80, 82: Steuerhebel
- 84: Exzenter
- 86: Betätigungshebel
- 88: Spannblock
- 90, 92: Steuernocken
- 94: Druckstück
- 96: Anlageschuch
- 98: Vertikale Achse
- 100: Federbelastetes Halteelement
- 102: Druckfeder
- 104: Kugeln
- 106: Spannfläche
- 108: Zentraler Flächenabschnitt
- 110, 112: gewölbte seitliche Flächenabschnitte
- 114: Lagerfläche
- 116: Andruckfläche
- 118: Aufnahme
- 100, 122, 124, 126: Anlageflächen
- 128, 130: Gegenflächen
- 132: Bügelfeder
- 134: Bügelabschnitt
- 136: Vertiefung
- 138, 140: Auflageflächen
- 142: Rasthebel
- 144: Nase
- 146: Gegenzähne

## Patentansprüche

1. Spannklaue (10) zur Anbringung an einer Gleitschiene (12) eines Operationstisches, mit
einem Grundkörper (38),
einer an dem Grundkörper (38) angebrachten Klemmstruktur (42, 44, 56, 74, 84, 88), die mindestens ein zur Anlage an die Gleitschiene (12) ausgebildetes Anlageelement (42, 44, 56) aufweist, und
einem mit der Klemmstruktur (42, 44, 56, 74, 84, 88) wirkverbundenen Betätigungsorgan (86), durch das die Klemmstruktur (42, 44, 56, 74, 84, 88) in einen verriegelten Zustand bringbar ist, in dem das Anlageelement (42, 44, 56) der Klemmstruktur (42, 44, 56, 74, 84, 88) an der Gleitschiene (12) anliegt,
wobei im verriegelten Zustand der Klemmstruktur (42, 44, 56, 74, 84, 88) das Anlageelement (42, 44, 56) an mindestens einem Kantenbereich (24, 28) der Gleitscheine (12) angreift, in dem sich eine Schienenkante (22, 26) zwischen zwei gegeneinander geneigten Schienenflächen (14, 16, 18) befindet,
wobei
das Anlageelement (42, 44, 56) zwei Kontaktflächen (50, 52, 68, 70) und eine zwischen den Kontaktflächen (54, 72) angeordnete Kantenaussparung (54, 72) aufweist, **dadurch gekennzeichnet, dass** im verriegelten Zustand der Klemmstruktur (42, 44, 56, 74, 84, 88), in dem eine der beiden Kontaktflächen (50, 52, 68, 70) an einer der beiden Schienenflächen (14, 16, 18) und die andere Kontaktfläche an der anderen Schienenfläche anliegt, die Kantenaussparung (54, 72) die Schienenkante (22, 26) berührungslos aufnimmt.

2. Spannklaue (10) nach Anspruch 1, **dadurch gekennzeichnet, dass** die Klemmstruktur (42, 44, 56, 74, 84, 88) einen beweglich gelagerten Spannblock (88) aufweist, der mit dem Betätigungsorgan (86) wirkverbunden ist und eine Spannfläche (106) hat, die durch Betätigen des Betätigungsorgans (86) an einer Fläche (20) der Gleitschiene (12), die von dem Anlageelement (42, 44, 56) unbeaufschlagt ist, festziehbar ist.

3. Spannklaue (10) nach Anspruch 2, **dadurch gekennzeichnet, dass** die Klemmstruktur (42, 44, 56, 74, 84, 88) einen mit dem Betätigungsorgan (86) gekoppelten, in dem Grundkörper (38) gelagerten Exzenter (84) aufweist, der mit Betätigen des Betätigungsorgans (86) die Spannfläche (106) des Spannblocks (88) auf die von dem Anlageelement (42, 44, 56) unbeaufschlagte der Fläche (20) der Gleitschiene (12) drückt.

4. Spannklaue (10) nach Anspruch 2 oder 3, **dadurch gekennzeichnet, dass** der Spannblock (88) aus einem mit dem Betätigungsorgan (86) wirkverbundenen Druckstück (94) und einem mit der Spannfläche (106) versehenen Anlageschuh (96) gebildet ist, der schwenkbar auf dem Druckstück (94) gelagert ist.

5. Spannklaue (10) nach Anspruch 4, **dadurch gekennzeichnet, dass** der Anlageschuh (96) durch ein federbelastetes Haltelement (100) in einer vorbestimmten Schwenkstellung gehalten ist.

6. Spannklaue (10) nach Anspruch 3, **dadurch gekennzeichnet, dass** der Spannblock (88) einstückig ausgebildet ist und eine von seiner Spannfläche (106) abgewandte Lagerfläche (114) hat, die eine konkave Form hat und sich in Kontakt mit einer an dem Exzenter (84) ausgebildeten Andruckfläche (116) befindet, die eine der konkaven Form der Lagerfläche (114) entsprechende konvexe Form hat.

7. Spannklaue (10) nach Anspruch 6, **dadurch gekennzeichnet, dass** der Spannblock (88) mit seinem von der Spannfläche (106) abgewandten Ende in einer in dem Grundkörper (38) ausgebildeten Aufnahme (118) angeordnet ist und mindestens zwei konvex geformte Anlageflächen (120, 122, 124, 126) aufweist, die an mindestens zwei in der Aufnahme (118) ausgebildeten Gegenflächen (128, 130) anliegen.

8. Spannklaue (10) nach Anspruch 7, **gekennzeichnet durch** eine Bügelfeder (132), die in einer in der Spannfläche (106) des Spannblocks (88) ausgebildeten Vertiefung (136) anliegt.

9. Spannklaue (10) nach einem der Ansprüche 2 bis 8, **dadurch gekennzeichnet, dass** die Spannfläche (106) des Spannblocks (88) aus einem zentralen, plan geformten Flächenabschnitt (108) und zwei seitlich an den planen Flächenabschnitt (108) anschließenden, gewölbten Flächenabschnitten (110, 112) gebildet ist.

10. Spannklaue (10) nach einem der vorhergehenden Ansprüche, **dadurch gekennzeichnet, dass** das mindestens eine Anlageelement mindestens zwei Anlageelemente (42, 44, 56) umfasst, die an verschiedenen Kantenbereichen (24, 28) der Gleitschiene (12) angreifen.

11. Spannklaue (10) nach einem der vorhergehenden Ansprüche, **dadurch gekennzeichnet, dass** das mindestens eine Anlageelement einen Schwenkriegel (56) umfasst, der mit einem Ende (58) in dem Grundkörper (38) schwenkbar gelagert ist und an seinem freien Ende (62) zwei konvex gewölbte Flächen (68, 70) hat, welche die Kontaktflächen bilden.

12. Spannklaue (10) nach Anspruch 11, **dadurch gekennzeichnet, dass** die Klemmstruktur (42, 44, 56, 74, 84, 88) ein Vorspannelement (74) aufweist, das den Schwenkriegel (56) in eine Schwenkstellung vorspannt, in der mindestens eine der beiden Kontaktflächen (68, 70) des Schwenkriegels (56) an der ihr zugeordneten Schienenfläche (26) anliegt.

13. Spannklaue (10) nach Anspruch 11 oder 12, **dadurch gekennzeichnet, dass** der Schwenkriegel (56) an seinem schwenkbar gelagerten Ende (58) eine Riegelfläche (80, 82) hat, die im verriegelten Zustand an einem an dem Exzenter (84) ausgebildeten Steuernocken (90, 92) anliegt.

14. Spannklaue (10) nach einem der vorhergehenden Ansprüche, **dadurch gekennzeichnet, dass** das Betätigungsorgan ein Schwenkhebel (86) mit einer Rastnase (144) ist, die im verriegelten Zustand lösbar in eine an dem Grundkörper (38) ausgebildete Zahnung (146) greift.

15. Spannklaue (10) nach einem der vorhergehenden Ansprüche, **dadurch gekennzeichnet, dass** das mindestens eine Anlageelement einen an dem Grundkörper (38) schwenkbar gelagerten Taumelnocken (42, 44) mit zwei konvex gewölbte Flächen (50, 52) umfasst, welche die Kontaktflächen bilden.

## Claims

1. A clamping claw (10) to be attached to a slide rail (12) of an operating table, comprising a main body (38),
a clamping structure (42, 44, 56, 74, 84, 88), which is attached to the main body (38) and which has at least one contact element (42, 44, 56) formed to bear on the slide rail (12), and an actuating element (86), which is operationally-connected to the clamping structure (42, 44, 56, 74, 84, 88) and by which the clamping structure (42, 44, 56, 74, 84, 88) is movable into a locked state, in which the contact element (42, 44, 56) of the clamping structure (42, 44, 56, 74, 84, 88) bears on the slide rail (12),
wherein, in the locked state of the clamping structure (42, 44, 56, 74, 84, 88), the contact element (42, 44, 56) engages on at least one edge region (24, 28) of the slide rail (12), in which a rail edge (22, 26) is located between two rail faces (14, 16, 18) inclined in relation to one another,
wherein the contact element (42, 44, 56) has two contact faces (50, 52, 68, 70) and an edge recess (54, 72) arranged between the contact faces (54, 72), **characterized in that**, in the locked state of the clamping structure (42, 44, 56, 74, 84, 88), in in which one of the two contact faces (50, 52, 68, 70) bears on one of the two rail faces (14, 16, 18) and the other contact face bears on the other rail face, the edge recess (54, 72) accommodates the rail edge (22, 26) without contact.

2. The clamping claw (10) as claimed in claim 1, **characterized in that** the clamping structure (42, 44, 56, 74, 84, 88) has a movably supported clamping block (88), which is operationally connected to the actuating element (86) and has a clamping face (106), which, by actuating the actuating element (86), can be tightened on a face (20) of the slide rail (12), to which the contact element (42, 44, 56) is not applied.

3. The clamping claw (10) as claimed in claim 2, **characterized in that** the clamping structure (42, 44, 56, 74, 84, 88) has an eccentric (84), which is coupled to the actuating element (86) and is supported in the main body (38), and, by actuating the actuating element (86), presses the clamping face (106) of the clamping block (88) onto the face (20) of the slide rail (12), to which the contact element (42, 44, 56) is not applied.

4. The clamping claw (10) as claimed in claim 2 or 3, **characterized in that** the clamping block (88) is formed from a pressure piece (94) operationally connected to the actuating element (86) and a contact shoe (96), which is provided with the clamping face (106) and is pivotably supported on the pressure piece (94).

5. The clamping claw (10) as claimed in claim 4, **characterized in that** the contact shoe (96) is held by a spring-loaded holding element (100) in a predetermined pivot position.

6. The clamping claw (10) as claimed in claim 3, **characterized in that** the clamping block (88) is formed in one piece and has a bearing face (114), which faces away from its clamping face (106), and which has a concave shape and is in contact with a contact pressure face (116), which is formed on the eccentric (84), and which has a convex shape corresponding to the concave shape of the bearing face (114).

7. The clamping claw (10) as claimed in claim 6, **characterized in that** the clamping block (88) is arranged with its end facing away from the clamping face (106) in a receptacle (118) formed in the main body (38) and has at least two convex contact faces (120, 122, 124, 126), which bear on at least two counter faces (128, 130) formed in the receptacle (118).

8. The clamping claw (10) as claimed in claim 7, **characterized by** a bow spring (132), which bears in a depression (136) formed in the clamping face (106) of the clamping block (88).

9. The clamping claw (10) as claimed in any one of claims 2 to 8, **characterized in that** the clamping face (106) of the clamping block (88) is formed from a central, planar surface section (108) and two curved surface sections (110, 112) laterally adjoining the planar surface section (108).

10. The clamping claw (10) as claimed in any one of the preceding claims, **characterized in that** the at least one contact element comprises at least two contact elements (42, 44, 56), which engage on various edge regions (24, 28) of the slide rail (12).

11. The clamping claw (10) as claimed in any one of the preceding claims, **characterized in that** the at least one contact element comprises a pivot bolt (56), which is pivotably supported with one end (58) in the main body (38) and has two convexly curved faces (68, 70), which form the contact faces, on its free end (62).

12. The clamping claw (10) as claimed in claim 11, **characterized in that** the clamping structure (42, 44, 56, 74, 84, 88) has a pre-tension element (74), which pre-tensions the pivot bolt (56) in a pivot position, in which at least one of the two contact faces (68, 70) of the pivot bolt (56) bears on the rail face (26) associated therewith.

13. The clamping claw (10) as claimed in claim 11 or 12, **characterized in that** the pivot bolt (56) has a bolt face (80, 82) on its pivotably supported end (58), which, in the locked state, bears on a control cam (90, 92) formed on the eccentric (84).

14. The clamping claw (10) as claimed in any one of the preceding claims, **characterized in that** the actuating element is a pivot lever (86) having a detent lug (144), which, in the locked state, detachably engages in gear teeth (146) formed on the main body (38).

15. The clamping claw (10) as claimed in any one of the preceding claims, **characterized in that** the at least one contact element comprises a tumbler cam (42, 44), which is pivotably supported on the main body (38), having two convexly curved faces (50, 52), which form the contact faces.

## Revendications

1. Griffe de serrage (10) à placer sur une glissière (12) d'une table d'opération, avec
un corps de base (38),
une structure de serrage (42, 44, 56, 74, 84, 88) placée sur le corps de base (38) qui présente au moins un élément d'application (42, 44, 56) conçu pour l'application sur la glissière (12), et un organe d'actionnement (86) relié fonctionnellement à la structure de serrage (42, 44, 56, 74, 84, 88) par lequel la structure de serrage (42, 44, 56, 74, 84, 88) peut être amenée à un état verrouillé dans lequel l'élément d'application (42, 44, 56) de la structure de serrage (42, 44, 56, 74, 84, 88) est appliqué sur la glissière (12),
dans lequel à l'état verrouillé de la structure de serrage (42, 44, 56, 74, 84, 88), l'élément d'application (42, 44, 56) est en prise sur au moins une zone de bordure (24, 28) de la glissière (12) en ce qu'une bordure de rail (22, 26) se trouve entre deux surfaces de rail (14, 16, 18) orientées l'une face à l'autre,
dans lequel
l'élément d'application (42, 44, 56) présente deux surfaces de contact (50, 52, 68, 70) et un évidement de bordure (54, 72) disposé entre les surfaces de contact (54, 72), **caractérisé en ce que**
à l'état verrouillé de la structure de serrage (42, 44, 56, 74, 84, 88) dans lequel l'une des deux surfaces de contact (50, 52, 68, 70) est appliquée sur l'une des deux surfaces de rail (14, 16, 18) et l'autre surface de contact est appliquée sur l'autre surface de rail (14, 16, 18), l'évidement de bordure (54, 72) reçoit sans contact la bordure de rail (22, 26).

2. Griffe de serrage (10) selon la revendication 1, **caractérisée en ce que** la structure de serrage (42, 44, 56, 74, 84, 88) présente un bloc de serrage (88) installé de façon mobile qui est relié fonctionnellement à l'organe d'actionnement (86) et a une surface de serrage (106) qui peut être resserrée par l'actionnement de l'organe d'actionnement (86) sur une surface (20) de la glissière (12) qui n'est pas sollicitée par l'élément d'application (42, 44, 56).

3. Griffe de serrage (10) selon la revendication 2, **caractérisée en ce que** la structure de serrage (42, 44, 56, 74, 84, 88) présente un système excentrique (84) couplé à l'organe d'actionnement (86), installé dans le corps de base (38) qui appuie avec l'actionnement de l'organe d'actionnement (86) la surface de serrage (106) du bloc de serrage (88) sur la surface (20) non sollicitée par l'élément d'application (42, 44, 56) de la glissière (12).

4. Griffe de serrage (10) selon la revendication 2 ou 3, **caractérisée en ce que** le bloc de serrage (88) est formé d'une pièce de pression (94) liée fonctionnellement à l'organe d'actionnement (86) et d'un sabot d'application (96) doté de la surface de serrage (106) qui est appliqué de façon à pouvoir pivoter sur la pièce de pression (94).

5. Griffe de serrage (10) selon la revendication 4, **caractérisée en ce que** le sabot d'application (96) est maintenu dans une position de pivotement prédéterminée par un élément de retenue contraint par un ressort (100).

6. Griffe de serrage (10) selon la revendication 3, **caractérisée en ce que** le bloc de serrage (88) est conçu d'un seul tenant et a une surface d'appui (114) détournée de sa surface de serrage (106) qui a une forme concave et se trouve en contact avec une surface de compression (116) conçue sur le système excentrique (84) qui a une forme convexe correspondant à la forme concave de la surface d'appui (114).

7. Griffe de serrage (10) selon la revendication 6, **caractérisée en ce que** le bloc de serrage (88) est disposé avec son extrémité détournée de la surface de serrage (106) dans un logement (118) conçu dans le corps de base (38) et présente au moins deux surfaces d'application ayant une forme convexe (120, 122, 124, 126) qui sont appliquées sur au moins deux surfaces opposées (128, 130) conçues dans le logement (118).

8. Griffe de serrage (10) selon la revendication 7, **caractérisée par** un ressort à étrier (132) qui est appliqué dans un enfoncement (136) conçu dans la surface de serrage (106) du bloc de serrage (88).

9. Griffe de serrage (10) selon l'une quelconque des revendications 2 à 8, **caractérisée en ce que** la surface de serrage (106) du bloc de serrage (88) est formée d'un segment de surface central de forme plane (108) et de deux segments de surface courbés (110, 112) adjacents latéralement au segment de surface plane (108).

10. Griffe de serrage (10) selon l'une quelconque des revendications précédentes, **caractérisée en ce que** l'au moins un élément d'application comprend au moins deux éléments d'application (42, 44, 56) qui sont en prise sur différentes zones de bordure (24, 28) de la glissière (12).

11. Griffe de serrage (10) selon l'une quelconque des revendications précédentes, **caractérisée en ce que** l'au moins un élément d'application comprend un pêne pivotant (56) qui est installé de façon à pouvoir pivoter avec une extrémité (58) dans le corps de base (38) et a à son extrémité libre (62) deux surfaces courbées convexes (68, 70) qui forment les surfaces de contact.

12. Griffe de serrage (10) selon la revendication 11, **caractérisée en ce que** la structure de serrage (42, 44, 56, 74, 84, 88) présente un élément de précontrainte (74) qui précontraint le pêne pivotant (56) dans une position de pivotement dans laquelle au moins l'une des deux surfaces de contact (68, 70) du pêne pivotant (56) est appliquée sur la surface de rail (26) qui lui est affectée.

13. Griffe de serrage (10) selon la revendication 11 ou 12, **caractérisée en ce que** le pêne pivotant (56) a à son extrémité installée de façon à pouvoir basculée (58), une surface de pêne (80, 82) qui s'applique à l'état verrouillé sur une came de commande (90, 92) conçue sur le système excentrique (84).

14. Griffe de serrage (10) selon l'une quelconque des revendications précédentes, **caractérisée en ce que** l'organe d'actionnement est un levier pivotant (86) doté d'un ergot d'encliquetage (144) qui s'imbrique à l'état verrouillé de façon détachable dans une denture (146) conçue sur le corps de base (38) .

15. Griffe de serrage (10) selon l'une quelconque des revendications précédentes, **caractérisée en ce qu'**au moins un élément d'application comprend une came oscillante (42, 44) installée de façon à pouvoir pivoter sur le corps de base (38) avec deux surfaces courbées de forme convexe (50, 52) qui forment les surfaces de contact.
